# EUROPEAN PATENT APPLICATION

(11) **EP 4 696 564 A1**
(43) Date of publication of application: **18.02.2026**
(21) Application number: 25195591.0
(22) Date of filing: 13.08.2025
(51) Int. Cl.: B60S 1/66, B60S 3/00, B60S 1/50, B60S 1/52, B08B 3/02, B08B 3/04

(54) **SELF-WASHING VEHICLE DEVICE**

(30) Priority: 15.08.2024 US 202463683272 P; 25.06.2025 US 202519248731
(71) Applicant: Palama, Daniel, Katy, TX 77493 (US)
(72) Inventor: Palama, Daniel, Katy, TX 77493 (US)
(74) Representative: Abel & Imray LLP

(57) **Abstract**

A self-washing vehicle device, which is a series of add-on features for a vehicle that work in conjunction to wash and clean the vehicle exterior. The self-washing vehicle device comprises a pipeline mechanism that is built around an exterior of the vehicle to distribute water. Further, the device comprises a built-in water tank that is installed within the vehicle to reserve water and soap. The built-in water tank is in communication with the pipeline mechanism. Further, the self-washing vehicle device is activated via a button located on the vehicular interior panel or dashboard. Accordingly, users can wash their vehicle without risk of damaging the vehicle by traveling through a car wash.

## Description

### CROSS REFERENCE TO RELATED APPLICATION

The present application claims priority to, and the benefit of, U.S. Provisional Application No. 63/683,272, which was filed on August 15, 2024, and is incorporated herein by reference in its entirety.

### FIELD OF THE INVENTION

The present invention relates generally to the field of self-washing vehicle devices. More specifically, the present invention relates to a pipeline system secured around an exterior of a vehicle, which mixes soap and water and releases it to various areas of the vehicle for full cleaning. Accordingly, the present disclosure makes specific reference thereto. Nonetheless, it is to be appreciated that aspects of the present invention are also equally applicable to other like applications, devices, and methods of manufacture.

### BACKGROUND

By way of background, this invention relates to self-washing vehicle devices. Generally, people who lease and own vehicles will inevitably need to wash the vehicle to maintain its clean, professional look. However, manual and automated drive through car washes can cause damage to the exterior surface and outer components/parts of a vehicle during the wash process.

For example, scratches and damages to the exterior paint can be caused via recycled water, dirty bristles, and other harsh mechanisms, etc. Further, many car wash machines have moving parts that can accidentally hit and damage the side mirrors and other outer components/parts of the vehicle. Bent or broken windshield wipers can occur if pressure is too high with the car wash. Additionally, wheel damage and misalignment may occur due to washing machine clamps that hold the wheels during a wash.

Accordingly, there is a demand for a self-washing vehicle device that utilizes a pipeline system to clean the vehicle. More particularly, there is a demand for a self-washing vehicle device that includes a built-in water tank for washing and cleaning the exterior of a vehicle.

Therefore, there exists a long-felt need in the art for a self-washing vehicle device that provides users with a water tank, soap, and water reserves and a pipeline system to clean the vehicle. There is also a long-felt need in the art for a self-washing vehicle device that allows users to activate the device via a series of buttons on the dash. Further, there is a long-felt need in the art for a self-washing vehicle device that allows a user to choose a quick, standard, deep, or custom wash for the vehicle. Moreover, there is a long-felt need in the art for a device that mixes soap and water into the pipeline system and releases it to various areas of the vehicle for a full cleaning. Further, there is a long-felt need in the art for a self-washing vehicle device that eliminates the need to use a car wash and risk damage to their vehicle. Finally, there is a long-felt need in the art for a self-washing vehicle device that allows users to wash their vehicle for a pre-set amount of time.

The subject matter disclosed and claimed herein, in one embodiment thereof, comprises a self-washing vehicle device. The device is a series of add-on features for a vehicle that work in conjunction to wash and clean the vehicle exterior. The self-washing vehicle device comprises a pipeline mechanism that is built around an exterior of the vehicle to distribute water. Further, the device comprises a built-in water tank that is installed within the vehicle to reserve water and soap. The built-in water tank is in communication with the pipeline mechanism, similar to the washer fluid mechanism currently installed within vehicles. Further, the self-washing vehicle device is activated via a button located on the vehicular interior panel or dashboard. There may be multiple wash options on the screen, such as quick wash, standard wash, deep wash, and custom wash. Further, users can wash their vehicle for a pre-set amount of time or utilize the custom wash feature to choose how long and which areas of the vehicle are to be washed. Accordingly, users can wash their vehicle without risk of damaging the vehicle by traveling through a car wash.

In this manner, the self-washing vehicle device of the present invention accomplishes all of the foregoing objectives and provides users with a device that washes their vehicle via a press of the button. The device is a pipeline mechanism secured to a vehicle, which is in communication with a built-in water tank. The device provides multiple wash options for the vehicle, and can be presented as OEM or as an aftermarket kit.

### SUMMARY OF THE INVENTION

The following presents a simplified summary in order to provide a basic understanding of some aspects of the disclosed innovation. This summary is not an extensive overview, and it is not intended to identify key/critical elements or to delineate the scope thereof. Its sole purpose is to present some general concepts in a simplified form as a prelude to the more detailed description that is presented later.

In accordance with an aspect of the invention there is provided a self-washing vehicle device as defined in the appended claims. The pipeline mechanism may be an add-on feature for the vehicle. Where the built-in water tank comprises a water reserve and a soap reserve, the user may be able to refill both the water reserve and the soap reserve of the built-in water tank, as needed. Where there are multiple wash options on the vehicular interior screen, such as control buttons for a quick wash, a standard wash, a deep wash, and a custom wash, the wash selected may allow for water and/or soap to be dispensed for a predetermined amount of time and/or at a predetermined pressure from the nozzles.

In accordance with another aspect of the invention there is provided a method of self-washing a vehicle.

The subject matter disclosed and claimed herein, in one embodiment thereof, comprises a self-washing vehicle device. The self-washing vehicle device comprises a pipeline mechanism that is built around an exterior of the vehicle to distribute water. Further, the device comprises a built-in water tank that is installed within the vehicle to reserve water and soap. The built-in water tank is in communication with the pipeline mechanism to dispense water and/or soap. Further, the self-washing vehicle device is activated via a control button located on the vehicle interior. Accordingly, users can wash their vehicle without risk of damaging the vehicle by traveling through a car wash.

In one embodiment, the self-washing vehicle device utilizes a water tank, soap and water reserves, and a pipeline mechanism to clean a vehicle. The device mixes soap and water into the pipeline mechanism and releases it to various areas of the vehicle for a full cleaning. Accordingly, the self-washing vehicle device eliminates the need to use a car wash and risk damage to windshield wipers, vehicle paint, mirrors, etc.

In one embodiment, the self-washing vehicle device comprises a pipeline mechanism that is built around an exterior of the vehicle to distribute water. Typically, the pipeline mechanism would be an add-on feature for the vehicle, but could also be integrated into the vehicle at the point of manufacture, depending on the needs and/or wants of a user. The pipeline mechanism includes a plurality of tubing secured all around an exterior of a vehicle to distribute water. The pipeline mechanism is distributed around the exterior of a vehicle, without impeding the user's view while driving. Further, the user can determine where the pipeline mechanism is secured and how much of the vehicle's exterior they want covered with the pipeline mechanism. Additionally, the pipeline mechanism has nozzles or at least holes positioned at spaced-apart intervals along the length of the pipeline mechanism. These nozzles/holes allow for the release of water from the pipeline mechanism onto the exterior of the vehicle for washing.

In one embodiment, the device comprises a built-in water tank that is installed within the vehicle, and which acts as a reserve for water and soap. Specifically, the built-in water tank would have a means for storing an amount of water and an amount of soap. The built-in water tank could be shaped and sized depending on the vehicle it is stored within, and/or depending on the needs and/or wants of a user. The built-in water tank is secured within a vehicle but easily accessible by a user. The user is able to refill both the water reserve and the soap reserve of the built-in water tank, as needed. Further, the built-in water tank is in communication with the pipeline mechanism to dispense water and/or soap. Typically, the built-in water tank is connected to the pipeline mechanism similar to the washer fluid mechanism currently installed within vehicles. Once activated, the built-in water tank mixes soap and water from the reserves into the pipeline mechanism. The soapy water mixture then proceeds through the pipeline mechanism, where it is released via the plurality of nozzles/holes to various areas of the vehicle for a full cleaning.

In one embodiment, the self-washing vehicle device comprises a water pump and an electric, variable speed motor, both in communication with the built-in water tank to pump and move water/soap from the built-in water tank to the pipeline mechanism to be released on the vehicle. Typically, the water pump and the electric motor are also secured within the vehicle, near the built-in water tank, such that the water pump and the electric motor can engage the built-in water tank, allowing for the dispensing of water and/or soap from the built-in water tank to the pipeline mechanism. The water pump is any suitable water pump as is known in the art that is suitable for pumping the required amount of water from the built-in water tank through the pipeline mechanism. Thus, the water pump can be larger for larger vehicles with large surface areas and smaller for smaller vehicles with less surface areas to wash. The electric motor is any suitable motor as is known in the art that is suitable for powering the water pump. Typically, the motor is an electric motor and a variable speed motor, but does not have to be. The electric motor can also be sized depending on the size of the water pump utilized to be able to efficiently power the size of water pump needed.

In one embodiment, the self-washing vehicle device is activated via a control button located on the vehicular interior screen (i.e., entertainment interface) or dashboard. Typically, there may be multiple wash options on the screen, such as control buttons for a quick wash, standard wash, deep wash, and custom wash. The wash selected allows for water and/or soap to be dispensed for a predetermined amount of time and/or at a predetermined pressure from the nozzles, etc. Specifically, the control buttons are in electronic communication with the water pump and electric motor, to dispense water and soap at predetermined pressures and predetermined lengths of time, depending on the control button selected. In operation, the electric motor controls the water pump to pump water from the built-in water tank. Water and/or soap is then mixed and circulated through the pipeline mechanism and then dispensed through the plurality of nozzles to wash the exterior of the vehicle.

In one embodiment, the device comprises a processor in communication with the control buttons, water pump, and electric motor to control water pressure and water volume, and timing of dispensing from the nozzles, depending on the type of wash selected by the user. Specifically, the processor acts to control how the water is dispensed through the nozzles, for how long, and what amount, such that when a user selects a particular wash via the control buttons, the vehicle is washed accordingly.

In one embodiment, if a user chooses the quick wash, the processor will engage the electric motor and water pump to pump water through the pipeline mechanism for a short amount of time. Further, if a user chooses the standard wash, the processor engages the electric motor and water pump to pump water for a longer period of time. If the user chooses the deep wash, the processor engages the electric motor and the water pump to pump water for an even longer amount of time and to dispense a larger volume of water on the vehicle for a deeper clean. In this deep wash selection, the water pressure coming from the nozzles may even be stronger to create a deeper wash than the other selections. Further, users can wash their vehicle for a pre-set amount of time or utilize the custom wash feature to choose how long and which areas of the vehicle are to be washed.

In yet another embodiment, the self-washing vehicle device comprises a plurality of indicia.

In yet another embodiment, a method of self-washing a vehicle is disclosed. The method includes the steps of providing a self-washing vehicle device comprising a pipeline mechanism and a built-in water tank. The method also comprises securing the pipeline mechanism around an exterior of a vehicle. Further, the method comprises installing the built-in water tank within the vehicle, such that it communicates with the pipeline mechanism. The method also comprises utilizing the control buttons on the dashboard to choose a specific wash option. Finally, the method comprises mixing soap and water into the pipeline mechanism and releasing it to various areas of the vehicle to wash the vehicle.

Numerous benefits and advantages of this invention will become apparent to those skilled in the art to which it pertains upon reading and understanding the following detailed specification.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and are intended to include all such aspects and their equivalents. Other advantages and novel features will become apparent from the following detailed description when considered in conjunction with the drawings.

### BRIEF DESCRIPTION OF THE DRAWINGS

The description refers to provided drawings in which similar reference characters refer to similar parts throughout the different views, and in which:
FIG. 1 illustrates a perspective view of one embodiment of the self-washing vehicle device of the present invention showing the pipeline mechanism in accordance with the disclosed architecture;
FIG. 2 illustrates a perspective view of one embodiment of the self-washing vehicle device of the present invention showing the pipeline mechanism in communication with the built-in water tank in accordance with the disclosed architecture;
FIG. 3 illustrates a perspective view of one embodiment of the self-washing vehicle device of the present invention showing the control buttons on the dashboard in accordance with the disclosed architecture; and
FIG. 4 illustrates a flowchart showing the method of self-washing a vehicle in accordance with the disclosed architecture.

### DETAILED DESCRIPTION OF THE PRESENT INVENTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof. Various embodiments are discussed hereinafter. It should be noted that the figures are described only to facilitate the description of the embodiments. They are not intended as an exhaustive description of the invention and do not limit the scope of the invention. Additionally, an illustrated embodiment need not have all the aspects or advantages shown. Thus, in other embodiments, any of the features described herein from different embodiments may be combined.

As noted above, there is a long-felt need in the art for a self-washing vehicle device that provides users with a water tank, soap and water reserves, and a pipeline system to clean the vehicle. There is also a long-felt need in the art for a self-washing vehicle device that allows users to activate the device via a series of buttons on the dash. Further, there is a long-felt need in the art for a self-washing vehicle device that allows a user to choose a quick, standard, deep, or custom wash for the vehicle. Moreover, there is a long-felt need in the art for a device that mixes soap and water into the pipeline system and releases it to various areas of the vehicle for a full cleaning. Further, there is a long-felt need in the art for a self-washing vehicle device that eliminates the need to use a car wash and risk damage to their vehicle. Finally, there is a long-felt need in the art for a self-washing vehicle device that allows users to wash their vehicle for a pre-set amount of time.

The present invention, in one exemplary embodiment, is a novel self-washing vehicle device. The device is a series of add-on features for a vehicle that work in conjunction to wash and clean the vehicle exterior. The self-washing vehicle device comprises a pipeline mechanism that is built around an exterior of the vehicle to distribute water. Further, the device comprises a built-in water tank that is installed within the vehicle to reserve water and soap. The built-in water tank is in communication with the pipeline mechanism. Further, the self-washing vehicle device is activated via a button located on the vehicular interior panel or dashboard. Accordingly, users can wash their vehicle without risk of damaging the vehicle by traveling through a car wash. The present invention also includes a novel method of self-washing a vehicle. The method includes the steps of providing a self-washing vehicle device comprising a pipeline mechanism and a built-in water tank. The method also comprises securing the pipeline mechanism around an exterior of a vehicle. Further, the method comprises installing the built-in water tank within the vehicle, such that it communicates with the pipeline mechanism. The method also comprises utilizing the control buttons on the dashboard to choose a specific wash option. Finally, the method comprises mixing soap and water into the pipeline mechanism and releasing it to various areas of the vehicle to wash the vehicle.

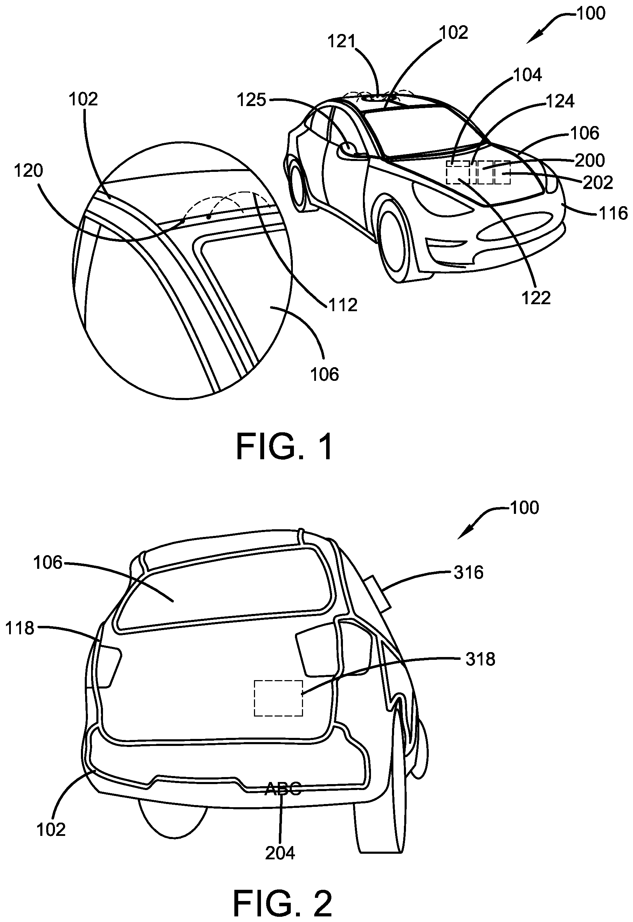

Referring initially to the drawings, FIG. 1 illustrates a perspective view of one embodiment of the self-washing vehicle device 100 of the present invention. In the present embodiment, the self-washing vehicle device 100 is a self-washing vehicle device 100 that provides a user 110 with a series of add-on features for a vehicle 106 that work in conjunction to wash and clean the vehicle 106. Specifically, the self-washing vehicle device 100 comprises a pipeline mechanism 102 in communication with a built-in water tank 104. The built-in water tank 104 is in communication with the pipeline mechanism 102 to dispense water 112 and/or soap around an exterior of the vehicle 106. Further, the self-washing vehicle device 100 is activated via a control button 108 located on the vehicle interior 114. Accordingly, users 110 can wash their vehicle 106 without risk of damaging the vehicle 106 by traveling through a car wash.

Generally, the self-washing vehicle device 100 utilizes a water tank 104, soap and water reserves, and a pipeline mechanism 102 to clean a vehicle 106. The device 100 mixes soap and water 112 into the pipeline mechanism 102 and releases it to various areas of the vehicle 106 for a full cleaning. Accordingly, the self-washing vehicle device 100 eliminates the need to use a car wash and risk damage to windshield wipers, vehicle paint, mirrors, etc., and other exterior parts of the vehicle 106.

Further, the self-washing vehicle device 100 comprises a pipeline mechanism 102 that is built around an exterior 116 of the vehicle 106 to distribute water 112. Typically, the pipeline mechanism 102 would be an add-on feature for the vehicle 106, but could also be integrated into the vehicle 106 at the point of manufacture, depending on the needs and/or wants of a user 110. The pipeline mechanism 102 includes a plurality of tubing 118 secured all around an exterior 116 of a vehicle 106 to distribute water 112. The pipeline mechanism 102 is distributed around an exterior 116 of a vehicle 106, without impeding the user's view while driving. Further, the user 110 can determine where the pipeline mechanism 102 is secured and how much of the vehicle's exterior 116 they want covered with the pipeline mechanism 102.

Additionally, the pipeline mechanism 102 has nozzles 120 or at least holes positioned at spaced-apart intervals along the length of the pipeline mechanism 102. These nozzles/holes 120 allow for the release of water 112 from the pipeline mechanism 102 onto the exterior 116 of the vehicle 106 for washing. Any suitable number of nozzles 120, can be utilized with the pipeline mechanism 102 as is known in the art. Further, the nozzles 120 can be any suitable water dispensing nozzles as is known in the art.

In one embodiment, nozzles 120 are embedded in the pipeline mechanism 102 and are able to rise up a few inches and subsequently rotate up to 360 degrees to cover a wider surface area of the vehicle 106. Further, a centralized disk 121 on the roof of the vehicle 106 can be fitted with several nozzles 120 and pipeline mechanism 102 to release soap/detergent and water 112 to clean the vehicle 106. Nozzles 120 and the pipeline mechanism 102 can also be positioned around the vehicle's side mirrors 125 to distribute water 112.

As shown in FIG. 2, the device 100 comprises a built-in water tank 104 that is installed within the vehicle 106, and which acts as a reserve for water 112 and soap. Specifically, the built-in water tank 104 would have a means for storing an amount of water 112 and an amount of soap. The built-in water tank 104 could be shaped and sized depending on the vehicle 106 it is stored within and/or depending on the needs and/or wants of a user 110. The built-in water tank 104 is secured within a vehicle 106 but easily accessible by a user 110. The user 110 is able to refill both the water reserve 122 and the soap reserve 124 of the built-in water tank 104, as needed. Further, the built-in water tank 104 is in communication with the pipeline mechanism 102 to dispense water 112 and/or soap. Typically, the built-in water tank 104 is connected to the pipeline mechanism 102, similar to the washer fluid mechanism currently installed within vehicles 106. Once activated, the built-in water tank 104 mixes soap and water 112 from the reserves 122, 124 into the pipeline mechanism 102. The soapy water mixture then proceeds through the pipeline mechanism 102, where it is released via the plurality of nozzles/holes 120 to various areas of the vehicle 106 for a full cleaning.

Further, the self-washing vehicle device 100 comprises a water pump 200 and an electric, variable speed motor 202, both in communication with the built-in water tank 104 to pump and move water/soap 112 from the built-in water tank 104 to the pipeline mechanism 102 to be released on the vehicle 106. Typically, the water pump 200 and the electric motor 202 are also secured within the vehicle 106, near the built-in water tank 104, such that the water pump 200 and the electric motor 202 can engage the built-in water tank 104, allowing for the dispensing of water 112 and/or soap from the built-in water tank 104 to the pipeline mechanism 102. The water pump 200 is any suitable water pump as is known in the art that is suitable for pumping the required amount of water 112 from the built-in water tank 104 through the pipeline mechanism 102. Thus, the water pump 200 can be larger for larger vehicles 106 with large surface areas and smaller for smaller vehicles 106 with less surface areas to wash. The electric motor 202 is any suitable motor as is known in the art that is suitable for powering the water pump 200. Typically, the motor 202 is an electric motor and a variable speed motor, but does not have to be. The electric motor 202 can also be sized depending on the size of the water pump 200 utilized to be able to efficiently power the size of water pump 200 needed.

In one embodiment, the self-washing vehicle device 100 comprises a plurality of indicia 204. The pipeline mechanism 102 of the device 100 may include advertising, a trademark, or other letters, designs, or characters, printed, painted, stamped, or integrated into the pipeline mechanism 102, or any other indicia 204 as is known in the art. Specifically, any suitable indicia 204 as is known in the art can be included, such as, but not limited to, patterns, logos, emblems, images, symbols, designs, letters, words, characters, animals, advertisements, brands, etc., that may or may not be vehicle, washing, or brand related.

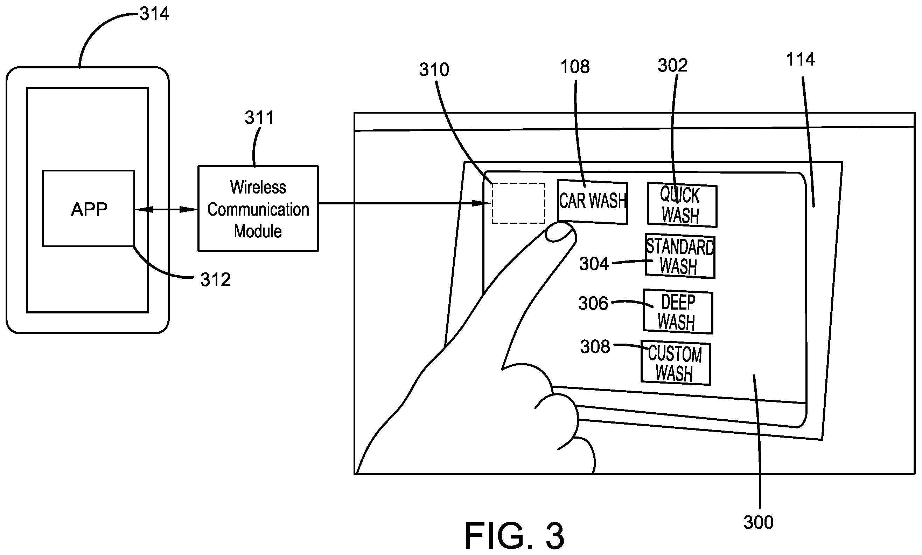

As shown in FIG. 3, the self-washing vehicle device 100 is activated via a control button 108 located on the vehicular interior screen 300 (i.e., entertainment interface) or dashboard. Typically, there may be multiple wash options on the screen 300, such as control buttons 108 for a quick wash 302, standard wash 304, deep wash 306, and custom wash 308. The wash selected allows for water 112 and/or soap to be dispensed for a predetermined amount of time and/or at a predetermined pressure from the nozzles 120, etc. Specifically, the control buttons 108 are in electronic communication with the water pump 200 and electric motor 202, to dispense water 112 and soap at predetermined pressures and predetermined lengths of time, depending on the control button 108 selected. In operation, the electric motor 202 controls the water pump 200 to pump water 112 from the built-in water tank 104. Water 112 and/or soap is then mixed and circulated through the pipeline mechanism 102 and then dispensed through the plurality of nozzles 120 to wash the exterior 116 of the vehicle 106.

In one embodiment, the device 100 comprises a processor 310 in communication with the control buttons 108, water pump 200, and electric motor 202 to control water pressure and water volume, and timing of dispensing from the nozzles 120, depending on the type of wash selected by the user 110. Specifically, the processor 310 acts to control how the water 112 is dispensed through the nozzles 120, for how long and what amount, such that when a user 110 selects a particular wash via the control buttons 108, the vehicle 106 is washed accordingly.

Further, if a user 110 chooses the quick wash 302, the processor 310 will engage the electric motor 202 and water pump 200 to pump water 112 through the pipeline mechanism 102 for a short amount of time. Further, if a user 110 chooses the standard wash 304, the processor 310 engages the electric motor 202 and water pump 200 to pump water 112 for a longer period of time. If the user 110 chooses the deep wash 306, the processor 310 engages the electric motor 202 and the water pump 200 to pump water 112 for an even longer amount of time and to dispense a larger volume of water 112 on the vehicle 106 for a deeper clean. In this deep wash selection 306, the water pressure coming from the nozzles 120 may even be stronger to create a deeper wash than the other selections. Further, users 110 can wash their vehicle 106 for a pre-set amount of time or utilize the custom wash feature 308 to choose how long and which areas of the vehicle 106 are to be washed. Additionally, the custom wash feature 308 allows a user to set the device 100 to wash itself daily or weekly at a specified time. For example, the user can set the device 100 to wash the vehicle 106 daily at 7:00 am or schedule the device 100 to wash the vehicle 106 on Monday, Wednesday, Friday, and Sunday's.

In another embodiment, the device 100 includes a wireless communications module 311 and additional sensors which would allow the device 100 to pair with a mobile application 312 on a smart device 314. Once paired, a user could control the device 100 via the mobile application 312 to wash the vehicle 106 remotely. The smart device 314 may perform any type of wireless communication, including, but not limited to, WIFI, BLUETOOTH, RFID, NFC, etc.

In another embodiment, an air dryer mechanism 316 can be added to the device 100 to drive the vehicle 106 when it is not in motion. The air dryer mechanism 316 includes an air condenser 318 similar to an AC compressor. The air dryer mechanism 316 would be an upgrade purchase, allowing users to choose to order the vehicle 106 with only the device 100 or with the addition air dryer mechanism 316.

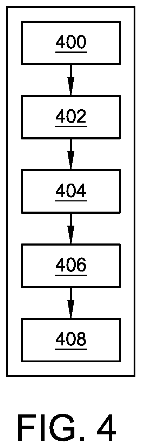

FIG. 4 illustrates a flowchart of the method of self-washing a vehicle. The method includes the steps of at 400, providing a self-washing vehicle device comprising a pipeline mechanism and a built-in water tank. The method also comprises at 402, securing the pipeline mechanism around an exterior of a vehicle. Further, the method comprises at 404, installing the built-in water tank within the vehicle, such that it communicates with the pipeline mechanism. The method also comprises at 406, utilizing the control buttons on the dashboard to choose a specific wash option. Finally, the method comprises at 408, mixing soap and water into the pipeline mechanism and releasing it to various areas of the vehicle to wash the vehicle. The device 100 provides multiple wash options for the vehicle, and can be presented as OEM or as an aftermarket kit.

Certain terms are used throughout the following description and claims to refer to particular features or components. As one skilled in the art will appreciate, different users may refer to the same feature or component by different names. This document does not intend to distinguish between components or features that differ in name but not structure or function. As used herein "self-washing vehicle device", "self-washing device", "vehicle device", and "device" are interchangeable and refer to the self-washing vehicle device 100 of the present invention.

Notwithstanding the foregoing, the self-washing vehicle device 100 of the present invention can be of any suitable size and configuration as is known in the art without affecting the overall concept of the invention, provided that it accomplishes the above-stated objectives. One of ordinary skill in the art will appreciate that the self-washing vehicle device 100 as shown in FIGS. 1-4 is for illustrative purposes only, and that many other sizes and shapes of the self-washing vehicle device 100 are well within the scope of the present disclosure. Although the dimensions of the self-washing vehicle device 100 are important design parameters for user convenience, the self-washing vehicle device 100 may be of any size that ensures optimal performance during use and/or that suits the user's needs and/or preferences.

Various modifications and additions can be made to the exemplary embodiments discussed without departing from the scope of the present invention. While the embodiments described above refer to particular features, the scope of this invention also includes embodiments having different combinations of features and embodiments that do not include all of the described features. Accordingly, the scope of the present invention is intended to embrace all such alternatives, modifications, and variations as fall within the scope of the claims, together with all equivalents thereof.

What has been described above includes examples of the claimed subject matter. It is, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter is intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A self-washing vehicle device that provides a user with add-on features for a vehicle that work in conjunction to wash and clean the vehicle, the self-washing vehicle device comprising:
a pipeline mechanism; and
a built-in water tank;
wherein the pipeline mechanism is secured to an exterior of a vehicle;
wherein the built-in water tank is secured within the vehicle;
wherein the pipeline mechanism is in communication with the built-in water tank; and
further wherein the pipeline mechanism dispenses water around an exterior of the vehicle to wash the vehicle.

2. The self-washing vehicle device of claim 1, wherein the pipeline mechanism includes a plurality of tubing secured all around an exterior of a vehicle to distribute water.

3. The self-washing vehicle device of claim 1 or 2, wherein the pipeline mechanism has nozzles or at least holes positioned at spaced-apart intervals along a length of the pipeline mechanism.

4. The self-washing vehicle device of any preceding claim, wherein the built-in water tank comprises a water reserve and a soap reserve.

5. The self-washing vehicle device of claim 4, wherein once activated the built-in water tank mixes soap and water from the reserves into the pipeline mechanism, the soapy water mixture then proceeds through the pipeline mechanism where it is released via the nozzles to various areas of the vehicle for a full cleaning.

6. The self-washing vehicle device of any preceding claim, further comprising a water pump and an electric motor both in communication with the built-in water tank to pump and move water from the built-in water tank to the pipeline mechanism to be released on the vehicle.

7. The self-washing vehicle device of any preceding claim, further comprising an air dryer mechanism and air condenser to dry the vehicle after washing.

8. The self-washing vehicle device of any preceding claim, further comprising a wireless communications module and additional sensors which would allow the self-washing vehicle device to pair with a mobile application on a smart device, and once paired, a user could control the self-washing vehicle device via the mobile application.

9. The self-washing vehicle device of any preceding claim, wherein the self-washing vehicle device is activated via a control button located on a vehicular interior screen or dashboard.

10. The self-washing vehicle device of claim 9, wherein there is multiple wash options on the vehicular interior screen, such as control buttons for a quick wash, a standard wash, a deep wash, and a custom wash.

11. The self-washing vehicle device of claim 9 or 10, further comprising a processor in communication with the control buttons, the water pump, and the electric motor to control water pressure and water volume, and timing of dispensing water from the nozzles, depending on type of wash selected by the user.

12. A self-washing vehicle device of claims 5 to 11, the self-washing vehicle device comprising:
a centralized disk on a roof of the vehicle and can be fitted with several nozzles and the pipeline mechanism to release the soapy water mixture.

13. The self-washing vehicle device of claims 9 to 12, wherein if a user chooses the quick wash, the processor will engage the electric motor and water pump to pump water through the pipeline mechanism for a short amount of time;
wherein if a user chooses the standard wash, the processor engages the electric motor and the water pump to pump water for a longer period of time than the quick wash; and
wherein if the user chooses the deep wash, the processor engages the electric motor and the water pump to pump water for an even longer amount of time than the standard wash and to dispense a larger volume of water on the vehicle than the standard wash for a deeper clean.

14. The self-washing vehicle device of claims 9 to 13, wherein users can wash their vehicle for a pre-set amount of time or utilize the custom wash feature to choose how long and which areas of the vehicle are to be washed or what days to set up a wash every week.

15. A method of self-washing a vehicle, the method comprising the following steps:
providing a self-washing vehicle device comprising a pipeline mechanism and a built-in water tank;
securing the pipeline mechanism around an exterior of a vehicle;
installing the built-in water tank within the vehicle, such that it communicates with the pipeline mechanism;
utilizing control buttons on a dashboard to choose a specific wash option; and
mixing soap and water into the pipeline mechanism and releasing it to various areas of the vehicle to wash the vehicle.
